# EUROPEAN PATENT SPECIFICATION

(11) **EP 3 364 231 B1**
(45) Date of publication and mention of the grant of the patent: **13.08.2025**
(21) Application number: 18156244.8
(22) Date of filing: 12.02.2018
(51) Int. Cl.: G02B 26/12

(54) **LIGHT SCANNING APPARATUS AND IMAGE FORMING APPARATUS**
LICHTABTASTUNGSVORRICHTUNG UND BILDERZEUGUNGSVORRICHTUNG
APPAREIL DE BALAYAGE OPTIQUE ET APPAREIL DE FORMATION D'IMAGES

(30) Priority: 15.02.2017 JP 2017025996
(43) Date of publication of application: 22.08.2018
(73) Proprietor: Canon Kabushiki Kaisha, Tokyo, 146-8501 (JP)
(72) Inventor: IMAI, Yuichiro, Tokyo, 146-8501 (JP)
(74) Representative: TBK

(56) References cited:
- EP-A2- 0 709 707
- EP-A2- 3 125 016
- JP-A- 2006 251 513
- US-A1- 2002 001 118
- US-A1- 2011 222 132
- US-A1- 2016 309 053

## Description

The present invention relates to a light scanning apparatus used in an image forming apparatus such as a copy machine, a printer, a facsimile, or a multi-function peripheral.

### Description of the Related Art

As a light scanning apparatus used in an image forming apparatus of an electrophotographic printing method, a light scanning apparatus having the following configuration is known in the art. That is, a light spot is formed on a surface of a photosensitive member by deflecting laser light emitted from a light source using a rotary polygon mirror and condensing them onto the photosensitive member using an imaging optical system. The light spot scans on the surface on the photosensitive member so that a latent image is formed on the surface of the photosensitive member.

Inside the light scanning apparatus, a deflector having a rotary polygon mirror is provided for scanning by deflecting the laser light emitted from a semiconductor laser device. A predetermined latent image is obtained on the photosensitive member by scanning the laser light on the photosensitive member using the rotary polygon mirror and repeatedly turning on and off the semiconductor laser device in association with the operation of the photosensitive member.

JP 2013-125041 A discusses a light scanning apparatus in which a plurality of semiconductor laser devices are arranged in parallel in a rotation axis direction of the rotary polygon mirror in order to mount a plurality of semiconductor laser devices used as a light source in a single housing.

In order to respond to demands for high image quality and high productivity, it is demanded for a single light source of the light scanning apparatus to provide a plurality of light emitting points (hereinafter, referred to as "multi-beam"). The multi-beam increases a size of the light source. If a plurality of multi-beam light sources are arranged in parallel in the rotation axis direction of the rotary polygon mirror as discussed in JP 2013-125041 A, a size of the light scanning apparatus also increases in the rotation axis direction of the rotary polygon mirror.
EP 3 125 016 A2 discloses a light scanning apparatus provided with two incident optical systems. The first incident optical system includes a light source for emitting light to expose a first photosensitive member, a collimator lens, a cylinder lens, and an aperture stop. The second incident optical system includes a light source for emitting light to expose a second photosensitive member, a collimator lens, a cylinder lens, and an aperture stop. In addition, each of the two light sources may include a plurality of light emitting points. The two light sources are arranged side by side along a rotation axis direction of a polygon mirror. The light sources are arranged with a space therebetween in the direction of the rotation axis of the polygon mirror.
US 2011/222132 A2 discloses a light scanning apparatus including a plurality of light sources and a polygon mirror that reflects laser lights emitted from the plurality of light sources to scan the laser lights on a photoreceptor. Further, the light source is press-fitted into a holding member, and the holding member is attached to the outside of a wall portion of a housing. A lens-barrel member that holds a collimator lens is attached to the inside of the wall portion of the housing. The light emitted from the light source passes through an opening formed in the wall portion of the housing and travels to the lens-barrel member provided inside the housing.
US 2002/001118 A1 discloses a multi-beam light source device provided with a plurality of laser diodes. The multi-beam light source device is provided with a first light source unit and a second light source unit. The first light source unit has a first laser diode and a second laser diode. The second light source unit has a third laser diode and a fourth laser diode. With this construction, the multi-beam light source device emits four laser beams. The four laser beams emitted from the multi-beam light source device are deflected and scanned by a reflection surface of a polygon mirror, and then pass through a first focusing lens and a second focusing lens, and are then reflected by a reflector, and are then focused onto a photosensitive medium by an elongated lens. That is, the plurality of laser beams emitted from the multi-beam light source device are focused onto the same photosensitive medium.
US 2016/309053 A1 discloses an optical scanning apparatus provided with a first light source unit having a semiconductor laser and a second light source unit having a semiconductor laser. Each of the semiconductor lasers includes a plurality of light sources. Both the laser beams emitted from the first light source unit and the laser beams emitted from the second light source unit are reflected by a polygon mirror, and thereafter pass through the same lens. Furthermore, the first light source unit and the second light source unit are arranged side-by-side in a rotation axis direction of the polygon mirror.
EP 0 709 707 A2 relates to an image forming apparatus that uses a multibeam scanning method that exposes one photosensitive member with light emitted from a plurality of light sources. By using the multi-beam scanning method, a plurality of scanning lines can be formed in one scan, so the printing speed can be increased. As a method to increase the printing speed, there is a method to increase the rotation speed of a polygon mirror, but there are concerns that the cost will increase significantly and there is an upper limit to the rotation speed. The multi-beam scanning method eliminates these concerns. Further, a semiconductor laser unit having a plurality of light emitting points is disclosed. The lights emitted from the light emitting points form a latent image on one photosensitive member.
JP 2006-251513A discloses a light scanning apparatus provided with a first light source unit having a first laser light source and a second light source unit having a second laser light source. A polygon mirror is formed in multistage. A laser light emitted from the first laser light source and a laser light emitted from the second laser light source are incident on a reflection surface of the polygon mirror at the same angle with respect to a virtual plane perpendicular to a rotation axis of the polygon mirror without being reflected by a mirror. That is, the polygon mirror is formed in multistage and a light path of the laser light emitted from the first laser light source and a light path of the laser light emitted from the second laser light source have the same angle with respect to the virtual plane perpendicular to the rotation axis of the polygon mirror. The laser light emitted from the first laser light source and the laser light emitted from the second laser light source are incident on the reflection surface of the polygon mirror at an angle perpendicular to the rotation axis of the polygon mirror.

### SUMMARY OF THE INVENTION

It is the object of the invention to miniaturize a light scanning apparatus in the rotation axis direction of a rotary polygon mirror.

The object of the invention is achieved by a light scanning apparatus having the features of claim 1 and by an image forming apparatus as defined in claim 9, comprising, inter alia, the light scanning apparatus of claim 1.

Further advantageous developments of the present invention are defined in the dependent claims.

Further features, advantages and effects of the present invention will become apparent from the following description of exemplary embodiments with reference to the attached drawings.

### BRIEF DESCRIPTION OF THE DRAWINGS

FIG. 1 is a schematic diagram illustrating an image forming apparatus according to a first embodiment.
FIG. 2 is a perspective view illustrating the light scanning apparatus according to the first embodiment.
FIG. 3 is a perspective view illustrating light paths of laser lights in the light scanning apparatus according to the first embodiment.
FIG. 4 is a cross-sectional view illustrating light paths of laser lights in the light scanning apparatus according to the first embodiment.
FIG. 5 is a perspective view illustrating main parts of the light scanning apparatus according to the first embodiment.
FIG. 6 is a diagram illustrating an angle β in a main scanning direction of the light source according to the first embodiment.
FIG. 7 is a diagram illustrating an angle y in a sub-scanning direction of the light source according to the first embodiment.
FIG. 8 is an exploded view illustrating vicinity of a light source unit as seen from the outside of the housing according to the first embodiment.
FIG. 9 is an exploded view illustrating vicinity of a light source unit as seen from the outside of the housing according to the first embodiment.
FIG. 10 is a perspective view illustrating a light source unit and a circuit board as seen from a rotary polygon mirror side according to the first embodiment.
FIG. 11 is an exploded view illustrating vicinity of the light source unit as seen from a side surface side of the housing according to the first embodiment.
FIGS. 12A, 12B, and 12C are perspective views illustrating arrangement of a light source unit and a light receiving sensor according to the first embodiment.
FIG. 13 is a perspective view illustrating main parts of a light scanning apparatus according to a second embodiment.
FIG. 14 is a diagram illustrating vicinity of the light source unit as seen from the outside of the housing according to the second embodiment.
FIG. 15 is an exploded view illustrating vicinity of the light source unit as seen from a side surface side of the housing according to the second embodiment.

### DESCRIPTION OF THE EMBODIMENTS

The embodiments of the present invention will now be described in detail in accordance with the accompanying drawings. In the following description, a rotation axis direction of a rotary polygon mirror 42 described below will be referred to as a "Z-axis direction," a longitudinal direction of an optical element will be referred to as a "Y-axis direction," and a direction perpendicular to the Y-axis and Z-axis directions will be referred to as an "X-axis direction." In addition, a rotational direction of the rotary polygon mirror 42 will be referred to as a main scanning direction, and a direction perpendicular to the main scanning direction will be referred to a sub-scanning direction. In this case, a main scanning direction may become in parallel with the Y-axis or Z-axis, and a sub-scanning direction may become in parallel with the Z-axis.

### First Embodiment

### <Configuration of Image Forming Apparatus>

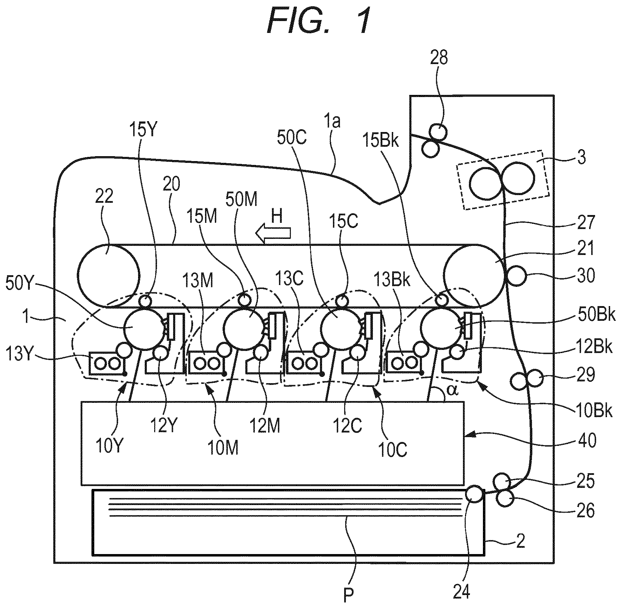

A configuration of an image forming apparatus according to a first embodiment will be described. FIG. 1 is a schematic diagram illustrating a whole configuration of a tandem type color laser beam printer according to the first embodiment. The laser beam printer (hereinafter, simply referred to as a "printer") has four image forming engines 10Y, 10M, 10C, and 10Bk (indicated by one-dotted chain lines) for forming toner images for each color of yellow Y, magenta M, cyan C, and black Bk. In addition, the printer has an intermediate transfer belt 20 which is a transfer-receiving member to which toner images are transferred from the image forming engines 10Y, 10M, 10C, and 10Bk. Furthermore, the toner images multi-transferred to the intermediate transfer belt 20 are transferred to a recording sheet P as a recording medium to form a full-color image. In the following description, reference symbols representing each color such as Y, M, C, and Bk will be omitted unless necessary.

The intermediate transfer belt 20 is formed in an endless shape and is looped around a pair of belt conveyance rollers 21 and 22. As the intermediate transfer belt 20 is rotated in an arrow direction H, the toner images formed by the image forming engine 10 are transferred. In addition, a secondary transfer roller 30 is arranged oppositely to one of the belt conveyance rollers 21 by interposing the intermediate transfer belt 20. A recording sheet P is inserted between a secondary transfer roller 30 and the intermediate transfer belt 20 pressed to each other, so that the toner images are transferred from the intermediate transfer belt 20. The four image forming engines 10Y, 10M, 10C, and 10Bk described above are arranged in parallel one another under the intermediate transfer belt 20, so that the toner images formed to match image information of each color are transferred to the intermediate transfer belt 20 (hereinafter, referred to as "primary transfer"). The four image forming engines 10 are arranged in order of a yellow image forming engine 10Y, a magenta image forming engine 10M, a cyan image forming engine 10C, and a black image forming engine 10Bk along a rotational direction of the intermediate transfer belt 20 (arrow direction H).

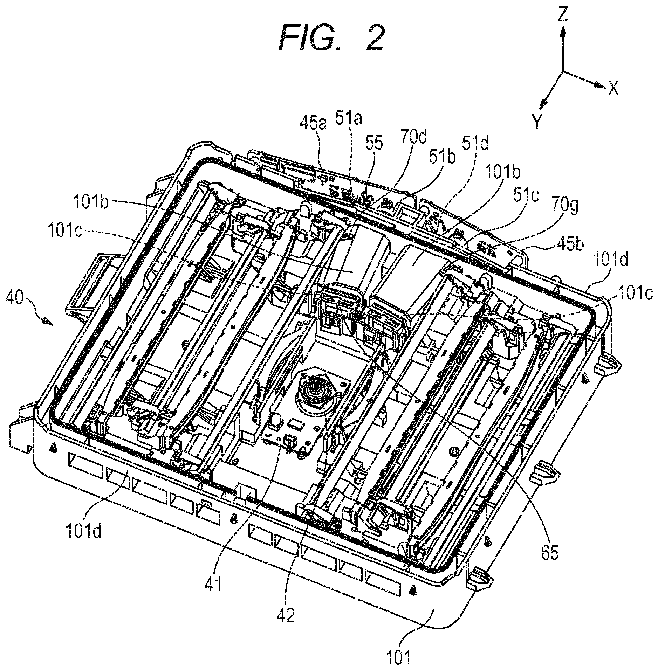

A light scanning apparatus 40 for exposing a photosensitive drum 50 as a photosensitive member provided in each image forming engine 10 depending on the image information is arranged under the image forming engine 10. The photosensitive drums 50Y, 50M, 50C, and 50Bk serve as first, second, third, and fourth photosensitive members, respectively. Note that the light scanning apparatus 40 is not illustrated specifically in FIG. 1, and it will be described in more details with reference to FIGS. 2 to 4. The light scanning apparatus 40 is shared by all of the image forming engines 10Y, 10M, 10C, and 10Bk, and has four semiconductor laser devices (not shown) for emitting laser lights modulated depending on the image information of each color. In addition, the light scanning apparatus 40 has a deflector provided with a rotary polygon mirror 42 rotated fast to deflect each laser light so as to scan the laser lights of four light paths along the rotation axis direction (Y-axis direction) of the photosensitive drum 50 and a scanner motor 41 configured to rotate the rotary polygon mirror 42. The deflector has a rotary polygon mirror 42, a scanner motor 41 serving as a drive unit for driving a motor used to rotate the rotary polygon mirror 42, and a board to which the motor and the scanner motor 41 are mounted. Each laser light scanned by the rotary polygon mirror 42 propagates along a predetermined path while being guided by an optical element provided in the light scanning apparatus 40. In addition, each laser light propagating along a predetermined path is used to expose each photosensitive drum 50 of each image forming engine 10 through each irradiation hole (not shown) provided in an upper part of the light scanning apparatus 40.

Each image forming engine 10 has a photosensitive drum 50 and a charging roller 12 for electrically charging the photosensitive drum 50 to a uniform background voltage. In addition, each image forming engine 10 has a developing device 13 configured to develop an electrostatic latent image formed on the photosensitive drum 50 (photosensitive member) through exposure of the laser light to form a toner image. The developing device 13 forms a toner image depending on image information of each color on the photosensitive drum 50 as a photosensitive member. The developing devices 13Y, 13M, 13C, and 13Bk serve as first, second, third, and fourth developing devices, respectively.

A primary transfer roller 15 is arranged to face the photosensitive drum 50 of each image forming engine 10 by interposing the intermediate transfer belt 20. The primary transfer roller 15 transfers the toner image on the photosensitive drum 50 to the intermediate transfer belt 20 by applying a predetermined transfer voltage. The primary transfer rollers 15Y, 15M, 15C, and 15Bk serve as first, second, third, and fourth transfer members, respectively.

Meanwhile, the recording sheet P is supplied from a feeding cassette 2 housed in a lower part of the printer housing 1 to the inside of the printer, specifically, a secondary transfer position inside of the printer where the intermediate transfer belt 20 and the secondary transfer roller 30 abut on each other. A pickup roller 24 and a feeding roller 25 are juxtaposed in an upper part of the feeding cassette 2 to pick up the recording sheet P stored in the feeding cassette 2. A retardation roller 26 for preventing duplicated delivery of the recording sheet P is arranged to face the feeding roller 25. The conveyance path 27 of the recording sheet P inside the printer is provide substantially vertically along the right side surface of the printer housing 1. The recording sheet P extracted from the feeding cassette 2 positioned in the bottom of the printer housing 1 is lifted along the conveyance path 27 and is fed to a registration roller 29 that controls an entering timing of the recording sheet P into a secondary transfer position. Then, the toner images are transferred to the recording sheet P in the secondary transfer position, which is then fed to a fixing unit 3 (indicated by a dotted line) provided in the downstream side of the conveyance direction. The recording sheet P having the toner images fixed by the fixing unit 3 is discharged to a discharge tray 1a provided in an upper part of the printer housing 1 through the discharge roller 28. In formation of a full-color image using the color laser beam printer configured in this manner, first, the light scanning apparatus 40 exposes the photosensitive drums 50 of each image forming engine 10 at predetermined timings depending on image information of each color.

### <Light Scanning Apparatus>

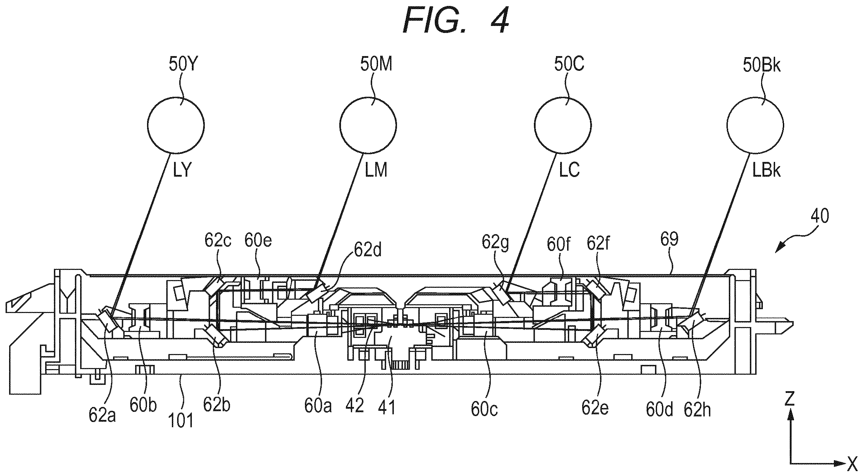

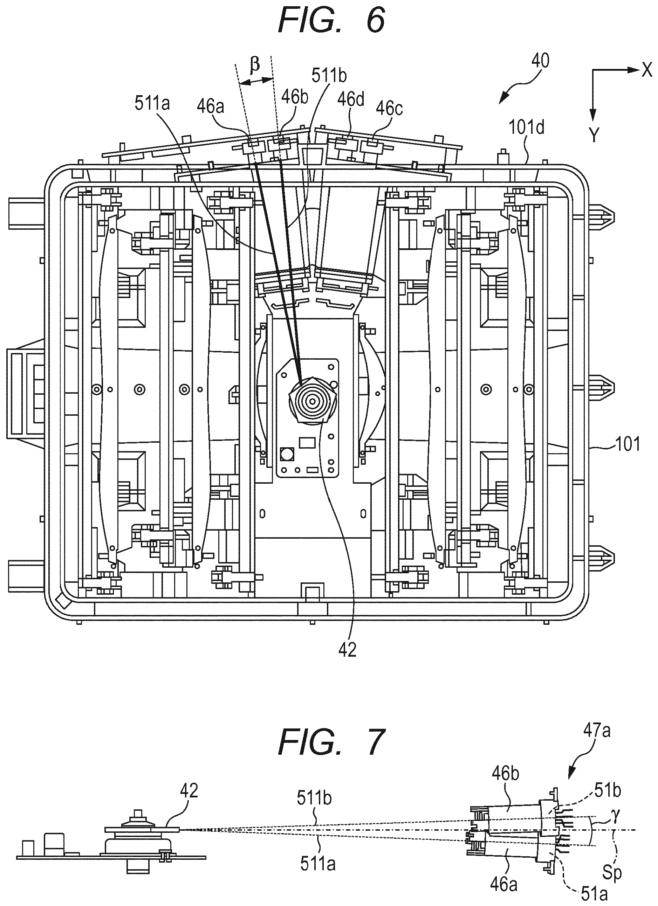

FIG. 2 is a perspective view illustrating the light scanning apparatus 40 by removing an upper cover 69 of the light scanning apparatus 40 (refer to FIG. 4) and exposing the rotary polygon mirror 42 or other optical components. For example, according to the first embodiment, a single image forming engine 10 is provided with a single light source 51 as a light source. Specifically, the image forming engine 10Y corresponds to the light source 51a as a first laser light source, and the image forming engine 10M corresponds to the light source 51b as a second laser light source. The image forming engine 10C corresponds to the light source 51c as a third laser light source, and the image forming engine 10Bk corresponds to the light source 51d as a fourth laser light source. In the following description, the subscripts "a" to "d" will be omitted unless necessary. The light source 51 is mounted on the circuit board 45 along with a laser driver (not shown) that drives the light source 51. The circuit board 45 is attached to the side wall portion 101d erected from the bottom surface of the housing 101. Specifically, a pair of light sources 51a and 51b are mounted on the circuit board 45a, and a pair of light sources 51c and 51d are mounted on the circuit board 45b. The light sources 51a and 51b are mounted such that an angular difference is generated between light paths of each laser light emitted from the light sources 51a and 51b in the main scanning direction and the sub-scanning direction (refer to FIGS. 6 and 7). As illustrated in FIG. 2, a pair of circuit boards 45a and 45b are attached to the side wall portion 101d of the housing 101. The light receiving sensor 55 as a light receiving portion described above is mounted on the circuit board 45a. The light receiving sensor 55 generates a synchronization signal.

The rotary polygon mirror 42 that deflects the laser light emitted from the light source 51 and the scanner motor 41 that rotates the rotary polygon mirror 42 are installed on the bottom surface of the housing 101. The laser light emitted from the light source 51 is reflected by the rotary polygon mirror 42, and the laser light reflected by the rotary polygon mirror 42 is directed to the photosensitive drum 50 serving as a surface to be scanned. In addition, the laser light emitted from the light source 51a is reflected by the rotary polygon mirror 42 and is directed to the light receiving sensor 55 mounted on the circuit board 45.

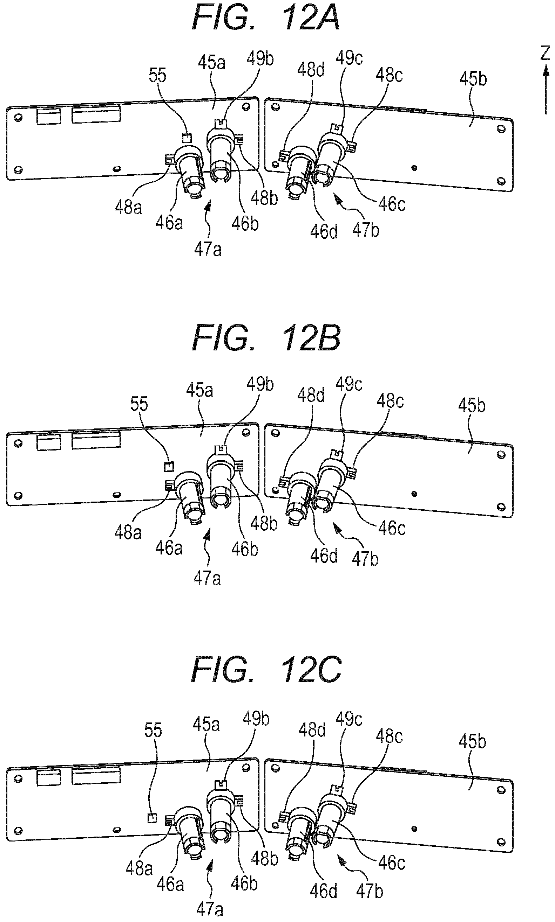

It is necessary to constantly maintain the time elapsing until the latent image starts to be formed on the photosensitive drum 50 by the laser light from the timing at which the light receiving sensor 55 receives the laser light. The light receiving sensor 55 is provided to maintain this time constantly. That is, the light receiving sensor 55 is used to determine the timing at which laser lights are emitted from the light sources 51a to 51d. The light receiving sensor 55 is arranged immediately over the light source 51a (chip holder 46a) (in the +Z direction) (refer to FIG. 12A). The laser light directed to the light receiving sensor 55 and the laser light emitted from the light source 51a have no angular difference in the main scanning direction. Meanwhile, the light scanning apparatus 40 is provided with a plurality of light sources 51. For example, the light sources 51a and 51b and the light sources 51c and 51d are provided in the -X side and the +X side with respect to a YZ-plane including the rotation axis of the rotary polygon mirror 42. For example, the light paths of laser lights emitted from a pair of light sources 51a and 51b in one side have an angular difference β in the main scanning direction (refer to FIG. 6). The light paths of laser lights emitted from a pair of light sources 51a and 51b have an angular difference in the main scanning direction for the following reasons. Specifically, the light paths of a pair of laser lights have an angular difference in the main scanning direction in order to reduce a sloped incident angle in the sub-scanning direction of the chip holders 46a and 46b even when the sizes of the chip holders 46a and 46b described below increase.

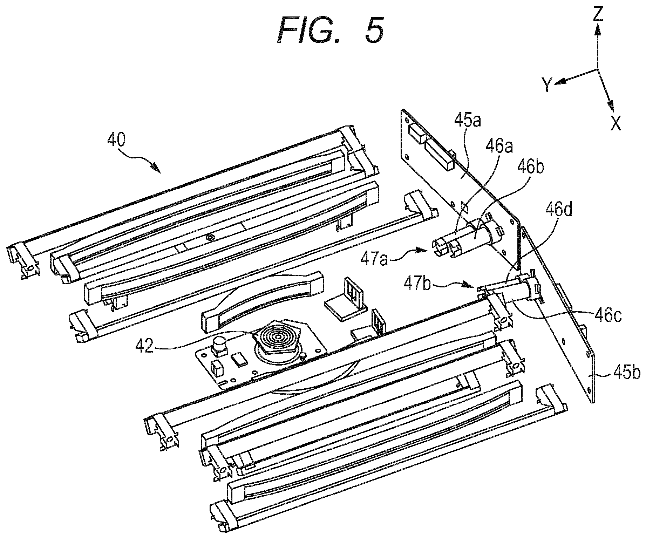

As the circuit board 45 is attached to the side wall portion 101d of the light scanning apparatus 40, the chip holders 46a and 46b protrude inward of the light scanning apparatus 40 (refer to FIG. 5). For this reason, the housing 101 has a partitioning wall (hereinafter, referred to as a "tubular portion 101b") shaped to cover the light source 51. The side wall portion 101d of the housing 101 to which the circuit board 45 is attached is provided with an opening 101c in order to guide laser light emitted from the light source 51 to the rotary polygon mirror 42. The opening 101c connects the inside and the outside of the light scanning apparatus 40 to each other. That is, the external air outside of the light scanning apparatus 40 can enter the inside of the light scanning apparatus 40 through the opening 101c. For this reason, the opening 101c is necessarily sealed with a sealing member for sealing the opening 101c. According to the first embodiment, a cylindrical lens 65 serves as a sealing member for sealing the opening 101c. The opening 101c is provided in a tip of the tubular portion 101b in which the sealing member can be easily installed. The tubular portion 101b is a partitioning wall for partitioning the inside and the outside of the light scanning apparatus 40 from each other. The opening 101c is provided to allow the laser light emitted from the light source 51a to pass from the outside of the housing 101 to the inside of the housing 101. In addition, the opening 101c is also provided to allow laser light to pass from the inside of the housing 101 to the outside of the housing 101 in order to allow the light receiving sensor 55 to receive the laser light reflected by the rotary polygon mirror 42. The tubular portion 101b is provided with a seat surface 70d or 70g on which an optical element is mounted.

### <Light Path of Laser Light>

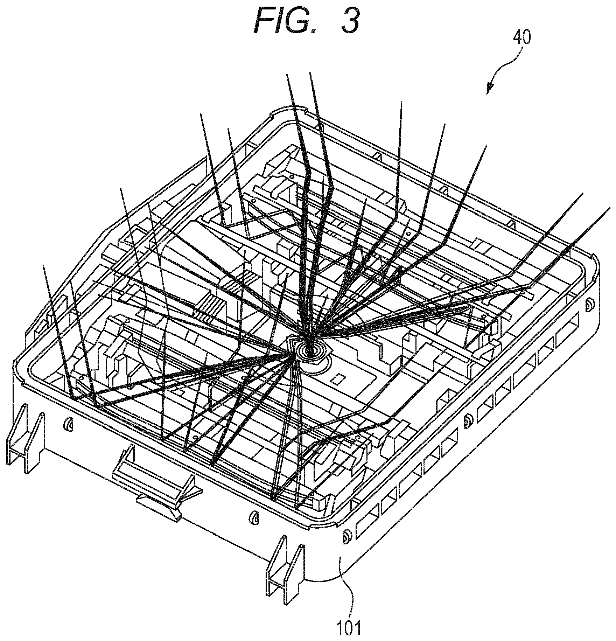

FIG. 3 is a diagram illustrating light paths of laser lights inside the light scanning apparatus 40, in which reference numerals are not illustrated for simplicity purposes. FIG. 3 illustrates light paths of laser lights of four colors in both end portions and a center portion of an image region in the main scanning direction. FIG. 4 is a schematic cross-sectional view illustrating a whole image of the light scanning apparatus 40 to which optical elements are attached. The light scanning apparatus 40 is provided with optical lenses 60a to 60f for guiding each laser light to the photosensitive drum 50 and focusing them, and reflection mirrors 62a to 62f as optical elements. The housing 101 internally houses the rotary polygon mirror 42 and the reflection mirrors 62a to 62f. How the laser lights are guided to the photosensitive drums 50 through the optical lenses 60a to 60f and the reflection mirrors 62a to 62h will be described with reference to FIG. 4. The laser light LY emitted from the light source 51a and mated with the photosensitive drum 50Y is deflected by the rotary polygon mirror 42 and is incident to the optical lens 60a. The laser light LY passing through the optical lens 60a is incident to the optical lens 60b, passes through the optical lens 60b, and is then reflected by the reflection mirror 62a. The laser light LY reflected by the reflection mirror 62a passes through a transparent window (not shown) and scans the photosensitive drum 50Y.

The laser light LM emitted from the light source 51b and mated with the photosensitive drum 50M is deflected by the rotary polygon mirror 42 and is incident to the optical lens 60a. The laser light LM passing through the optical lens 60a is reflected by the reflection mirrors 62b and 62c, is incident to the optical lens 60e, passes through the optical lens 60e, and is then reflected by the reflection mirror 62d. The laser light LM reflected by the reflection mirror 62d passes through the transparent window (not shown) and scans the photosensitive drum 50M. The optical lens 60a is a lens where the laser lights emitted from the light sources 51a and 51b out of a plurality of optical elements and deflected by the rotary polygon mirror 42 are initially incident.

The laser light LC emitted from the light source 51c and mated with the photosensitive drum 50C is deflected by the rotary polygon mirror 42 and is incident to the optical lens 60c. The laser light LC passing through the optical lens 60c is reflected by the reflection mirrors 62e and 62f and is incident to the optical lens 60f, and the laser light LC passing through the optical lens 60f is reflected by the reflection mirror 62g. The laser light LC reflected by the reflection mirror 62g passes through the transparent window (not shown) and scans the photosensitive drum 50C.

The laser light LBk emitted from the light source 51d and mated with the photosensitive drum 50Bk is deflected by the rotary polygon mirror 42 and is incident to the optical lens 60c. The laser light LBk passing through the optical lens 60c is incident to the optical lens 60d, passes through the optical lens 60d, and is then reflected by the reflection mirror 62h. The laser light LBk reflected by the reflection mirror 62h passes through the transparent window (not shown) and scans photosensitive drum 50Bk. The optical lens 60c is a lens where the laser lights emitted from the light sources 51c and 51d out of a plurality of optical elements and deflected by the rotary polygon mirror 42 are initially incident.

### <Light Source Unit>

FIG. 5 is a schematic diagram illustrating main parts of the light scanning apparatus 40 by removing some elements such as the housing 101. A light source unit 47 mounted with the light source 51 that emits laser lights is arranged on the side wall portion 101d of the light scanning apparatus 40. The light scanning apparatus 40 is internally provided with the rotary polygon mirror 42 that reflects and deflects the laser lights, the optical lens 60 and the reflection mirror 62 necessary to guide the laser lights to the surface to be scanned and form images of the laser lights on the surface. In FIG. 5, some reference numerals are omitted, and this similarly applies to the following drawings.

The laser light deflected and scanned by the rotary polygon mirror 42 passes through the optical lenses 60a and 60c having strong power in the main scanning direction and is then guided to the optical lenses 60b, 60d, 60e, and 60f having strong optical power in the sub-scanning direction (refer to FIG. 4). Then, the laser light reflected by the reflection mirror 62 at least one time is guided to the photosensitive drum 50 as a member to be scanned and is focused on the surface of the photosensitive drum 50 as a surface to be scanned.

A pair of light source units 47a and 47b are provided on the side wall portion 101d of the housing 101. Specifically, the light source unit 47a has the light source 51a mated with the photosensitive drum 50Y and the light source 51b mated with the photosensitive drum 50M, and the light source unit 47b has the light source 51c mated with the photosensitive drum 50C and the light source 51d mated with the photosensitive drum 50Bk. Hereinafter, the subscripts "a" and "b" will be omitted unless necessary. A pair of light source units 47 are provided plane-symmetrically with respect to a plane passing through a rotation axis of the rotary polygon mirror 42 in parallel with the YZ-plane. A single light source 51 has a plurality of light emitting points such as eight (or four) light emitting points, and eight (or four) laser lights are emitted from a single light source. For this reason, the size of the light source 51 increases, compared to a light source having, for example, a single light emitting point. The light emitting point of the laser light can be reduced to be equal to or smaller than 1 mm even when the number of emitted laser lights increases. However, a size of the component consisting of an electrical connection part for driving a plurality of light emitting points increases. For this reason, a packaging size of the light source having a plurality of light emitting points increases as a result.

### <Arrangement of Light Source>

In order to reduce the size of the housing 101 as small as possible, the light scanning apparatus 40 is configured as described below. The size of the housing 101 is determined such that a length of the reflection mirror 62 is set to a necessary and sufficient length so that the reflection mirror 62 guides the laser light to the surface to be scanned, and the size of the housing 101 has a minimum size required to house the reflection mirror 62. The light source 51 is arranged to match the side wall portion 101d in the housing 101 having such a size. As a result, it is possible to compactly reduce the size of the whole light scanning apparatus 40. FIG. 6 is a schematic diagram illustrating the light scanning apparatus 40 as seen from the upper side (+Z direction) of the light scanning apparatus 40. The light source 51 is held in the chip holder 46. As illustrated in FIG. 6, the chip holder 46 is arranged in the side wall portion 101d of the housing 101.

According to the first embodiment, for example, the light source 51 has eight light emitting points having an outer diameter of Φ11.6. In order to arrange the light source 51 on the side wall portion 101d of the housing 101, it is necessary to increase the angular difference between a pair of light sources 51. This is because interference between a pair of light source units 47 can be prevented when the angular difference between a pair of the light sources 51 arranged in the same light source unit 47 is provided only in the sub-scanning direction (Z-axis direction). Here, the light path of the laser light emitted from the light source 51a will be referred to as a light path 511a as a first light path, and the light path of the laser light emitted from the light source 51b will be referred to as a light path 511b as a second light path. The angular difference between a pair of light sources 51 refers to an angle between the light paths 511a and 511b. As the angular difference between the light paths 511a and 511b of the pair of light sources 51 in the sub-scanning direction increases, the reflection surface of the rotary polygon mirror 42 becomes distant from an ideal position. Therefore, an error of the position where the laser light arrives on the photosensitive drum 50 increases. As a result, image quality is degraded. For example, an irradiation position of the laser light on the photosensitive drum 50 deviates due to surface eccentricity of the rotary polygon mirror 42.

In order to reduce the angular difference between the light paths 511a and 511b of the light sources 51a and 51b in the sub-scanning direction, it is assumed that the light source unit 47 is disposed apart from the rotary polygon mirror 42. Then, it is necessary to separate the side wall portion 101d where the light source unit 47 of the light scanning apparatus 40 is provided from the rotary polygon mirror 42. That is, the size of the housing 101 in the Y-axis direction increases. Therefore, in order to reduce the size of the light scanning apparatus 40 as small as possible while guaranteeing sufficient necessary image quality, the light source unit 47 is arranged to emit the laser light such that an angular difference is also provided in the main scanning direction. As a result, it is possible to bring the side wall portion 101d of the housing 101 closer to the rotary polygon mirror 42 and reduce the size of the housing 101 in the Y-axis direction. An angle β as a second angle illustrated in FIG. 6 refers to an angular difference between the chip holder 46a as a first holder and the chip holder 46b as a second holder mounted on the same light source unit 47 in the main scanning direction. The angle β of the main scanning direction is an angle between the light path 511a (dotted line) and the light path 511b (dotted line) in the main scanning direction.

FIG. 7 is a schematic diagram illustrating the chip holders 46a and 46b mounted on the same light source unit 47a and the rotary polygon mirror 42 as seen from the X-axis direction. The light source unit 47a has a pair of chip holders 46a and 46b. The chip holder 46a has the light source 51a, and the chip holder 46b has the light source 51b. The light source unit 47a will be described below in more details. In order to miniaturize the light scanning apparatus 40, four laser lights emitted from the four light sources 51 are deflected by a single rotary polygon mirror 42. The laser lights emitted from the light sources 51a and 51b and the laser lights emitted from the light sources 51c and 51d are scanned in the opposite direction with respect to a plane parallel to the YZ-plane through the rotation axis of the rotary polygon mirror 42. The light sources 51a and 51b are scanned in the same direction using the rotary polygon mirror 42. A virtual plane that is perpendicular to the rotation axis of the rotary polygon mirror 42 and passes through the reflection surface of the rotary polygon mirror 42 is set as a virtual plane Sp (one-dotted chain line). For example, the light source 51a is arranged such that the laser light emitted from the light source 51a is incident to the reflection surface of the rotary polygon mirror 42 from the downside with respect to the virtual plane Sp. For example, the light source 51b is arranged such that the laser light emitted from the light source 51b is incident to the reflection surface of the rotary polygon mirror 42 from the upside with respect to a plane passing through the virtual plane Sp. An angle y as a first angle is an angle between the light paths 511a and 511b in the sub-scanning direction. The light sources 51a and 51b are arranged in mutually different sides with respect to the virtual plane Sp traversing a plurality of reflection surfaces by setting the rotation axis of the rotary polygon mirror 42 as a normal line.

The chip holder 46a as the first holder and the chip holder 46b as the second holder are attached to mutually different positions in the rotation axis direction of the rotary polygon mirror 42 and the optical axis direction of the lens. The chip holder 46a is arranged in the bottom surface side of the housing 101 relative to the chip holder 46b. The chip holders 46a and 46b are attached to the housing 101 such that a first incident light path (first light path 511a) of the laser light emitted from the light source 51a and incident to the rotary polygon mirror 42 is placed between a second incident light path (second light path 511b) of the laser light emitted from the light source 51b and incident to the rotary polygon mirror 42 and the optical lens 60a. In addition, the chip holders 46a and 46b are attached to the housing 101 such that a part of the chip holder 46a and a part of the chip holder 46b overlap one another in the rotation axis direction of the rotary polygon mirror 42. Specifically, a part of the upper end of the chip holder 46a and a part of the lower end of the chip holder 46b overlap one another in the rotation axis direction of the rotary polygon mirror 42. At least in the rotation axis direction of the rotary polygon mirror 42, a part of the upper end of the lens barrel portion of the chip holder 46a and a part of the lower end of the lens barrel portion of the chip holder 46b overlap one another. The lens barrel portion is a tubular portion that connects a portion for holding the collimator lens 53a (53b) and a portion for holding the light source 51a (51b) to each other. That is, the chip holders 46a and 46b are arranged to incline with respect to a rotation axis of the rotary polygon mirror 42. For this reason, the light scanning apparatus 40 can be designed in a small size in the rotation axis direction of the rotary polygon mirror 42, compared to a light scanning apparatus in which a pair of chip holders are juxtaposed in the rotation axis direction of the rotary polygon mirror 42.

The light source 51a is provided under the virtual plane Sp so as to have an angle y/2 with respect to the virtual plane Sp in the sub-scanning direction (Z-axis direction). The light source 51b is provided over the virtual plane Sp so as to have an angle y/2 with respect to the virtual plane Sp in the sub-scanning direction (Z-axis direction). The angle y/2 is designed, for example, to be equal to or smaller than 3° in order to miniaturize the housing 101 and reduce the surface eccentricity of the rotary polygon mirror 42. That is, the angle y is designed, for example, to be larger than 0° and equal to or smaller than 6°. Note that the angle y may be set to "0°" depending on applications. In this case, in FIG. 7, the light paths 511a and 511b become parallel to each other. For this reason, it is necessary to use a rotary polygon mirror having a reflection surface placed on the light paths 511a and 511b. In addition, it is necessary to perform design for a case where the light paths of the laser lights deflected by the rotary polygon mirror are set to zero (γ=0°). In the case of y=0°, the reflection surface may have a two-stage configuration such that a rotary polygon mirror having different reflection surfaces placed on the light paths 511a and 511b may be employed, or a rotary polygon mirror having the same reflection surface placed on the light paths 511a and 511b may be employed.

In a pair of light sources 51a and 51b mounted on the same light source unit 47a, the chip holders 46a and 46b are arranged to have the following positional relationship. The chip holder 46a has the light source 51a that emits laser light directed to the photosensitive drum 50Y arranged outside of the light scanning apparatus 40 with respect to the rotary polygon mirror 42. The chip holder 46a is arranged in a direction (-Z direction) opposite to the direction (+Z direction) directed from the light scanning apparatus 40 to the photosensitive drum 50Y, compared to the other chip holder 46b.

The laser lights directed to a pair of photosensitive drums 50M and 50C arranged in the vicinity of the center of the width direction (X direction) of the image forming apparatus out of a plurality of photosensitive drums 50 are finally reflected by the reflection mirrors 62d and 62g inside the light scanning apparatus 40. The reflection mirrors 62d and 62g are arranged in the vicinity of the rotary polygon mirror 42. Furthermore, the reflection mirrors 62d and 62g are provided on the left surfaces 70d and 70g (refer to FIG. 2). In order to suppress image degradation caused by vibration of the reflection mirrors 62d and 62g by increasing a natural frequency of the reflection mirrors 62d and 66g, the left surfaces 70d and 70g are provided in the side wall portion 101d side of the housing 101 which has high stiffness. Furthermore, in a direction (Z direction) perpendicular to the installation surface of the light scanning apparatus 40, the left surface 70d of the reflection mirror 62 is arranged in the vicinity of the light source unit 47a. In particular, the chip holder 46b arranged closer to the +Z direction becomes closer to the left surface 70d of the reflection mirror 62d in the Z direction.

The laser light directed to the photosensitive drum 50 is not perpendicular to the installation surface of the light scanning apparatus 40 (parallel to the Z direction) . As described above in conjunction with FIG. 4, an angle between a direction of the laser light LM directed from the reflection mirror 62d, where the laser light is finally reflected inside the light scanning apparatus 40, to the photosensitive drum 50M and the installation plane of the light scanning apparatus 40 becomes the angle α as illustrated in FIG. 1. According to the first embodiment, the angle α is set to be smaller than 90° (0<α<90°). For example, if the angle α becomes 90°, the image forming engine 10 is provided immediately over the transparent window (not shown) provided in the light scanning apparatus 40, so that toner may fall down from the image forming engine 10, and the transparent window (not shown) may be easily polluted. In comparison, if the angle α is set to have a range 0<α<90°, the toner does not fall down to the transparent window (not shown), so that it is possible to address an imaging failure that may be generated when the laser light emitted from the light scanning apparatus 40 collides with the toner.

In this manner, the laser lights LM and LC emitted from the light scanning apparatus 40 are irradiated to the photosensitive drums 50M and 50C substantially at the same angle α. For this reason, the left surface 70d of the reflection mirror 62d where the laser light LM is finally reflected inside the light scanning apparatus 40 becomes closer to the chip holder 46 relative to the left surface 70b of the reflection mirror 62g in the width direction (X direction) of the light scanning apparatus 40.

### <Configuration of Light Source Unit>

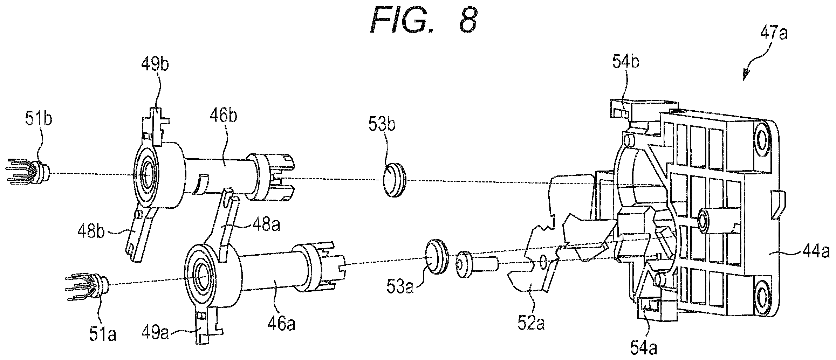

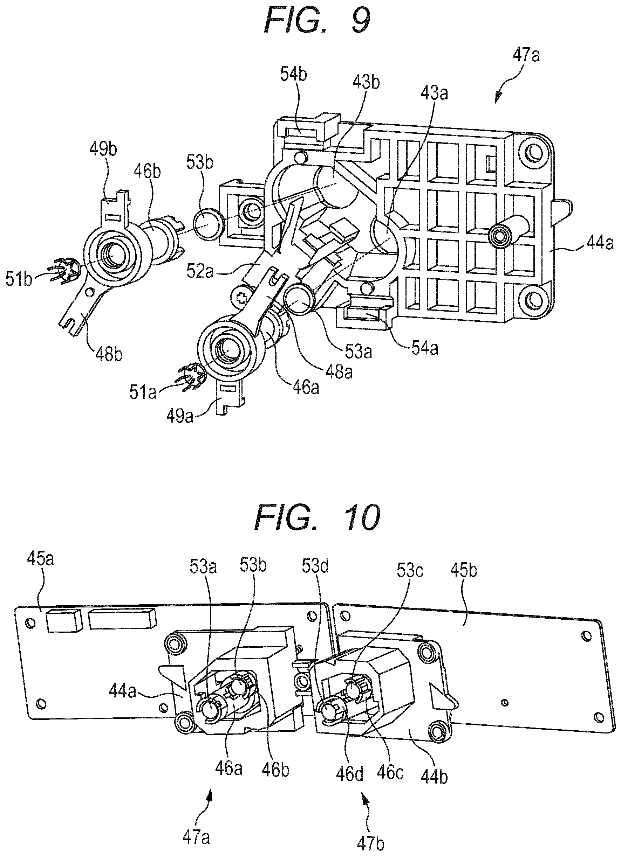

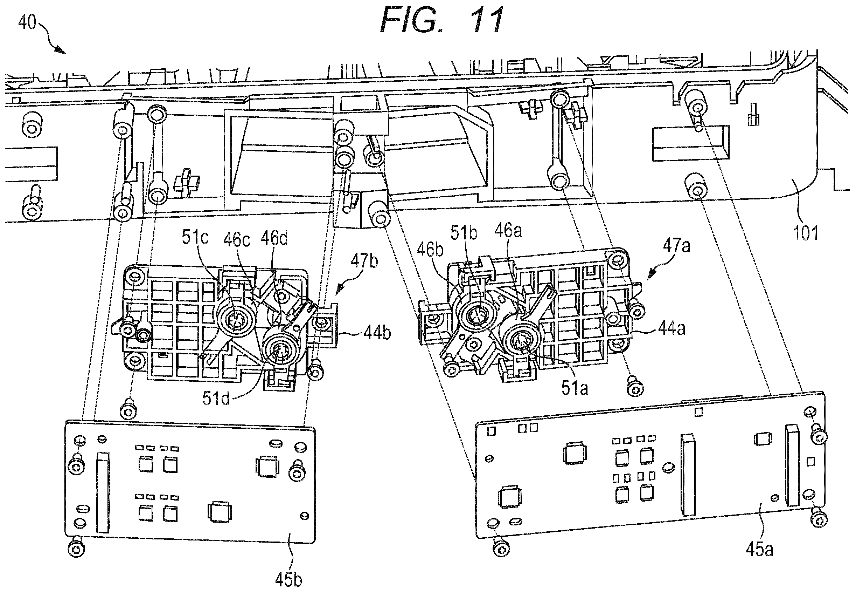

FIG. 8 is an exploded perspective view illustrating a configuration of the light source unit 47a. FIG. 9 is an exploded perspective view of FIG. 8 as seen from a different angle. FIG. 10 is a perspective view illustrating a state in which the laser holders 44a and 44b are attached to the circuit boards 45a and 45b as seen from the rotary polygon mirror 42 side. FIG. 11 is an exploded perspective view illustrating the housing 101 of the light scanning apparatus 40, the laser holders 44a and 44b, and the circuit boards 45a and 45b as seen from the outside of the housing 101. The left side of FIG. 8 becomes the external side of the light scanning apparatus 40, and the right side of FIG. 8 becomes the rotary polygon mirror 42 side. The light sources 51a and 51b are laser chips having, for example, eight (or four) light emitting points. The light sources 51a and 51b are pressedly inserted into the chip holders 46a and 46b, respectively, formed of resin. The chip holders 46a and 46b have an adjustment protrusion 48a as a first protrusion and an adjustment protrusion 48b as a second protrusion, respectively, in the side where the light sources 51a and 51b are pressedly inserted. The adjustment protrusions 48a and 48b are protrusions gripped when the chip holders 46a and 46b are rotated. The adjustment protrusions 48a and 48b are used, for example, in a factory to control an interval between the scanning positions of the laser lights emitted from each light emitting point of the light sources 51a and 51b on the photosensitive drum 50 depending on an image resolution. The chip holders 46a and 46b have fixing portions 49a and 49b in the side where the light sources 51a and 51b are pressedly inserted. The fixing portions 49a and 49b are used to fix the chip holders 46a and 46b to the laser holder 44a. The laser holder 44a has receiving portions 54a and 54b. The fixing portion 49a of the chip holder 46a is bonded and fixed to the receiving portion 54a of the laser holder 44a. The fixing portion 49b of the chip holder 46b is bonded and fixed to the receiving portion 54b of the laser holder 44a. In the chip holders 46a and 46b, the collimator lenses 53a and 53b are attached to an end portion opposite to the end portion where the light sources 51a and 51b are pressedly inserted.

The chip holders 46a and 46b mounted with the light sources 51a and 51b and the collimator lenses 53a and 53b are attached to a single laser holder 44a. The laser holder 44a is inserted into openings 43a and 43b provided in the laser holder 44a from the collimator lenses 53a and 53b side. A plate spring 52a is inserted between the chip holders 46a and 46b attached to the laser holder 44a. The chip holders 46a and 46b are fixed to the laser holder 44a by virtue of an elastic force of the plate spring 52a so as not to move inside the laser holder 44a. Note that, although the chip holders 46a and 46b are attached to the laser holder 44a separate from the housing 101 in the embodiment, the chip holders 46a and 46b may be directly attached to the housing 101. If the chip holders 46a and 46b are directly attached to the housing 101, a structure such as the laser holder 44a illustrated in FIG. 8 (portions relating to attachment of the chip holders 46a and 46b) is integrally formed on the side wall of the housing 101.

The laser holder 44a to which a pair of chip holders 46a and 46b are attached is attached between the housing 101 and the circuit board 45a using screws or the like as illustrated in FIG. 11. Lead wires of the light sources 51a and 51b of the chip holders 46a and 46b are electrically connected to the circuit board 45a through soldering. Note that this similarly applies to attachment of the light sources 51c and 51d, the chip holders 46c and 46d, and the laser holder 44b, and it will not be described repeatedly. However, the chip holder 46c is arranged over the virtual plane Sp (refer to FIG. 7) to be distant from the rotary polygon mirror 42 relative to the chip holder 46d in the X-axis direction. In addition, the chip holder 46d is arranged under the virtual plane Sp to be closer to the rotary polygon mirror 42 relative to the chip holder 46c in the X-axis direction. The chip holders 46c and 46d are attached to the housing 101 such that the third incident light path of the laser light emitted from the light source 51c and incident to the rotary polygon mirror 42 is placed between the fourth incident light path of the laser light emitted from the light source 51d and incident to the rotary polygon mirror 42 and the optical lens 60c. In addition, the chip holders 46c and 46d are attached to the housing 101 such that a part of the chip holder 46c and a part of the chip holder 46d overlap one another in the rotation axis direction of the rotary polygon mirror 42. The light sources 51a to 51d according to the first embodiment are arranged to match four corners of a parallelogram as seen from the rotary polygon mirror 42 side.

### <Arrangement of Light Receiving Sensor>

FIGS. 12A, 12B, and 12C are perspective views illustrating arrangement of the light source unit and the light receiving sensor according to the first embodiment. The circuit board 45a is a board where electric components for driving the light sources 51a and 51b and the light receiving sensor 55 are mounted. In order to implement the light scanning apparatus 40 compactly and inexpensively, the light scanning apparatus 40 according to the first embodiment drives the light sources 51a and 51b and the light receiving sensor 55 using the same circuit board 45a. The light receiving sensor 55 is arranged in a position where the laser light emitted from the light source 51a is reflected by the rotary polygon mirror 42, passes straightly, and then arrives. For example, when the laser light reflected by the rotary polygon mirror 42 and then reflected by another reflection mirror is guided to the light receiving sensor, the housing 101 may be deformed due to influence of heat, and the light path of the laser light incident to the light receiving sensor 55 may change. In this case, a position where the latent image starts to be formed on the photosensitive drum 50 (hereinafter, referred to as a latent image start position) may change. For this reason, according to the first embodiment, the laser light reflected by the rotary polygon mirror 42 is not reflected by the reflection mirror, but is directly guided to the light receiving sensor 55.

The rotational direction of the rotary polygon mirror 42 or the arrangement of the light receiving sensor 55 is determined such that the laser light reflected by the rotary polygon mirror 42 is received by the light receiving sensor 55, and is then irradiated to the photosensitive drum 50. A timing for starting formation of the latent image on each photosensitive drum 50 (hereinafter, referred to as a "write timing") is determined on the basis of the timing at which the laser light arrives at the light receiving sensor 55. As a result, it is possible to align the latent image start position on the photosensitive drum 50. The light receiving sensor 55 is arranged to satisfy these conditions.

Since the laser light reflected by the rotary polygon mirror 42 is incident to the light receiving sensor 55, it is necessary to prevent the chip holder 46 arranged in the vicinity of the light receiving sensor 55 from interfering with the laser light. The chip holder 46 has the adjustment protrusion 48 and the fixing portion 49. The adjustment protrusion 48 and the fixing portion 49 are arranged such that a pair of light sources 51 housed in a single light source unit 47 become distant from each other. Specifically, the chip holder 46a is arranged such that the adjustment protrusion 48a becomes distant from the chip holder 46b, and the fixing portion 49a becomes distant from the chip holder 46b. The chip holder 46b is arranged such that the adjustment protrusion 48b becomes distant from the chip holder 46a, and the fixing portion 49b becomes distant from the chip holder 46a. That is, the chip holders 46a and 46b are arranged as illustrated in FIGS. 12A, 12B or 12C. This similarly applies to the chip holders 46c and 46d.

The adjustment protrusion 48 and the fixing portion 49 are arranged in this way for the two following reasons. First, using this arrangement, it is possible to design the receiving portion 54 for bonding the fixing portion 49 of the chip holder 46 to the laser holder 44. Second, using this arrangement, it is possible to secure a space for manipulating a tool when the adjustment protrusion 48 for controlling an interval of the laser light in the sub-scanning direction is manipulated with the tool.

Here, it is assumed that light scanning apparatus 40 is configured such that the laser light emitted from the chip holder 46 is received by the light receiving sensor 55. The laser light emitted from the light source 51a and reflected by the rotary polygon mirror 42 is necessarily incident to the light receiving sensor 55 without colliding with the adjustment protrusion 48a and the fixing portion 49a of the chip holder 46a.

FIGS. 12A to 12C illustrate the light source unit 47 when the laser light emitted from the chip holder 46a and reflected by the rotary polygon mirror 42 is received by the light receiving sensor 55. FIG. 12C is a diagram illustrating a case not falling within the scope of the claimed invention, where the light receiving sensor 55 is arranged substantially in the same position as that of the adjustment protrusion 48a of the chip holder 46a in the sub-scanning direction, and is arranged to become distant from the chip holder 46a in the main scanning direction. As illustrated in FIG. 12C, in order to arrange the light receiving sensor 55 such that the laser light arriving at the light receiving sensor 55 does not collide with the adjustment protrusion 48a, it is necessary to increase a distance between the light source 51a and the light receiving sensor 55 in the main scanning direction.

FIG. 12A is a diagram illustrating a case falling within the scope of the claimed invention, where the light receiving sensor 55 is arranged over the light source 51a (chip holder 46a) of the chip holder 46a in the sub-scanning direction, and is arranged substantially in the same position as that of the chip holder 46a in the main scanning direction. As illustrated in FIG. 12A, the light receiving sensor 55 is arranged immediately over the light source 51a of the chip holder 46a. The light receiving sensor 55 is arranged substantially in the same position as that of the light source 51a in the main scanning direction. By arranging the light receiving sensor 55 as illustrated in FIG. 12A, it is possible to prevent the adjustment protrusion 48a and the fixing portion 49a from colliding with the laser light received by the light receiving sensor 55. For this reason, it is possible to reduce the distance between the chip holder 46a and the light receiving sensor 55. As a result, it is possible to improve a degree of freedom when the light receiving sensor 55 and the chip holder 46a are arranged in the circuit board 45a. That is, since the laser light emitted from the light source 51a and reflected by the rotary polygon mirror 42 directly arrives at the light receiving sensor 55, it is possible to miniaturize the light scanning apparatus 40.

In FIG. 12A, the light receiving sensor 55 is provided substantially in the same position as that of the light source 51a in the main scanning direction. Alternatively, for example, the light receiving sensor 55 may be arranged to become distant from the position of the light source 51a in the main scanning direction. FIG. 12B is a diagram illustrating a case where the laser light emitted from the chip holder 46a is received by the light receiving sensor 55. FIG. 12B illustrates a case not falling within the scope of the claimed invention, where the light receiving sensor 55 is arranged over the adjustment protrusion 48a of the chip holder 46a in the sub-scanning direction and substantially in the same position as that of the adjustment protrusion 48a in the main scanning direction. As illustrated in FIG. 12B, the same effect as that of FIG. 12A is obtained even when the light receiving sensor 55 is arranged upward obliquely to the chip holder 46a. Note that the same effect is obtained even when the laser light emitted from the light source 51b of the chip holder 46b is received by the light receiving sensor 55 arranged as illustrated in FIGS. 12A and 12B. According to the first embodiment, it is possible to miniaturize the light scanning apparatus in the rotation axis direction of the rotary polygon mirror.

### Second Embodiment

In the first embodiment, the cyan light source unit 47c is arranged in a position higher than that of the black light source unit 47d in the sub-scanning direction (Z-axis direction). In the first embodiment, the virtual line obtained by linking the four chip holders 46a to 46d has a parallelogram shape. According to the second embodiment, the chip holders 46a and 46b and the light receiving sensor 55 are arranged similarly to those of the first embodiment. However, according to the second embodiment, the chip holders 46c and 46d are arranged reversely to those of the first embodiment, and the chip holder 46d is arranged to be higher than the chip holder 46c in the sub-scanning direction (Z-axis direction). According to the second embodiment, the four chip holders 46a to 46d are arranged in the shape of an unfolded fan.

### <Arrangement of Light Source>

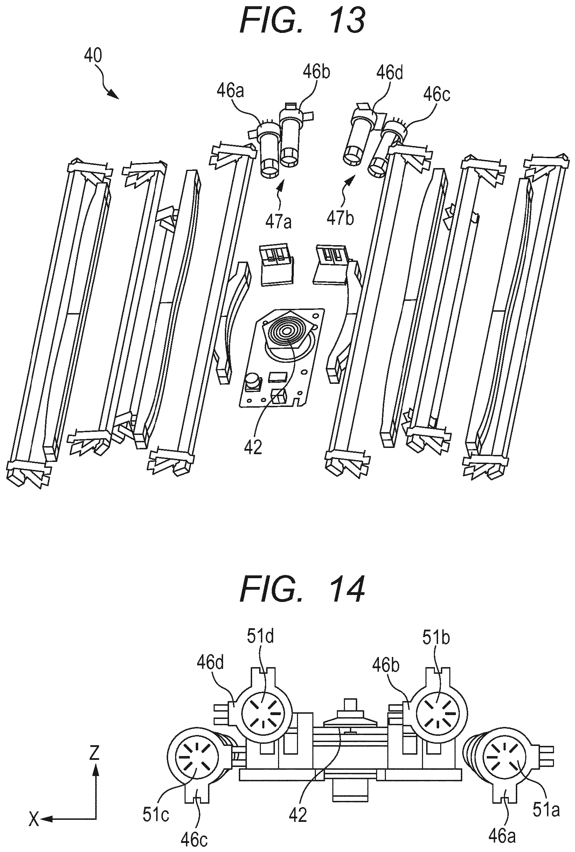

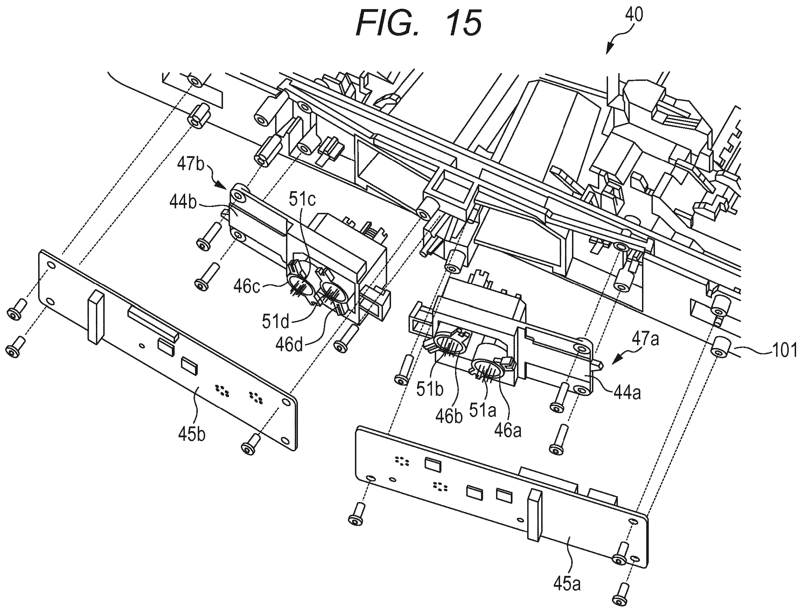

FIG. 13 is a schematic diagram illustrating main parts of the light scanning apparatus 40 by removing the housing 101 or the like. The chip holders 46a and 46b are arranged similarly to those of the first embodiment, but vertical positions of the chip holders 46c and 46d are different from those of the first embodiment in the sub-scanning direction. FIG. 14 is a schematic diagram illustrating the light scanning apparatus 40 as seen from the outside and shows only main parts. FIG. 15 is an exploded perspective view illustrating the housing 101, the laser holder 44, and the circuit board 45 of the light scanning apparatus 40 as seen from the outside of the light scanning apparatus 40. As illustrated in FIG. 14, the chip holders 46a to 46d are arranged in the shape of the unfolded fan as seen from the outside of the housing 101. That is, the chip holders 46a and 46b and the chip holders 46c and 46d are arranged plane-symmetrically to each other with respect to a plane parallel to the YZ-plane through the rotation axis of the rotary polygon mirror 42. Specifically, the chip holder 46c is arranged under the virtual plane Sp and becomes distant from the rotary polygon mirror 42 relative to the chip holder 46d in the X-axis direction. The chip holder 46d is arranged over the virtual plane Sp and becomes closer to the rotary polygon mirror 42 relative to the chip holder 46c in the X-axis direction.

As described above, according to the second embodiment, a pair of light sources 51 are held in a single light source unit 47, and a pair of light source units 47 are arranged symmetrically to the side wall portion 101d of the housing 101 with respect to a plane parallel to the YZ-plane through the rotation axis of the rotary polygon mirror 42. One of the pair of light sources 51 of the single light source unit 47 having a larger incident angle in the main scanning direction is positioned under the other light source 51 in a vertical direction. As a result, according to the second embodiment, it is possible to miniaturize the light scanning apparatus in the rotation axis direction of the rotary polygon mirror.

While the present invention has been described with reference to exemplary embodiments, it is to be understood that the invention is not limited to the disclosed exemplary embodiments.

## Claims

1. A light scanning apparatus (40), comprising:
a plurality of optical elements (60a to 60f, 62a to 62f) including a mirror (60a to 60f) and a lens (62a to 62f);
a housing (101) configured to house the plurality of optical elements (60a to 60f, 62a to 62f) therein;
a first holder (46a) attached to the housing (101), and configured to hold a first laser light source (51a) having a plurality of light emitting points to emit first laser lights for exposing a first photosensitive member (50Y) and a first collimator lens (53a) through which the first laser lights emitted from the first laser light source (51a) pass, wherein the first holder (46a) is configured to have a first lens barrel portion that connects a portion for holding the first laser light source (51a) and a portion for holding the first collimator lens (53a);
a second holder (46b) attached to the housing (101), and configured to hold a second laser light source (51b) having a plurality of light emitting points to emit second laser lights for exposing a second photosensitive member (50M) and a second collimator lens (53b) through which the second laser lights emitted from the second laser light source (51b) pass, wherein the second holder (46b) is configured to have a second lens barrel portion that connects a portion for holding the second laser light source (51b) and a portion for holding the second collimator lens (53b);
a rotary polygon mirror (42) configured to be rotated and provided with a plurality of reflection surfaces by which the first laser lights emitted from the first laser light source (51a) and the second laser lights emitted from the second laser light source (51b) are deflected; and
a lens (60a), of the plurality of optical elements (60a to 60f, 62a to 62f), to which respective laser lights of the first laser lights emitted from the first laser light source (51a) and deflected by the rotary polygon mirror (42) and the second laser lights emitted from the second laser light source (51b) and deflected by the rotary polygon mirror (42) are first incident,
wherein the first laser lights emitted from the first laser light source (51a) and the second laser lights emitted from the second laser light source (51b) are incident to a reflection surface of the rotary polygon mirror (42) at respective angles inclined over and under a virtual plane that is perpendicular to a rotation axis of the rotary polygon mirror (42) and incident to the plurality of reflection surfaces without being reflected by a mirror,
wherein when viewing the first holder (46a) and the second holder (46b) from above the virtual plane in a rotation axis direction of the rotary polygon mirror (42), the first holder (46a) and the second holder (46b) are attached to the housing (101) so that a first incident light path of the first laser lights incident to the rotary polygon mirror (42) is in between a second incident light path of the second laser lights incident to the rotary polygon mirror (42) and the lens (60a),
wherein in the rotation axis direction, a part of the first lens barrel portion and a part of the second lens barrel portion overlap one another,
wherein the light scanning apparatus (40) further comprises a light receiving portion (55) that receives the first laser lights emitted from the first laser light source (51a) and deflected by the rotary polygon mirror (42) to generate a synchronization signal,
wherein the light receiving portion (55) is arranged in a different position from a position of the first holder (46a) in the rotation axis direction,
wherein when viewing the light receiving portion (55) from above the virtual plane in the rotation axis direction, the light receiving portion (55) is arranged in a position for receiving the first laser lights emitted from the first laser light source (51a) and deflected by the rotary polygon mirror (42) to scan between the second incident light path and the lens (60a) without being reflected by a mirror,
wherein the light receiving portion (55) is arranged in a side-by-side manner with the first holder (46a) in the rotation axis direction,
wherein the light scanning apparatus (40) further comprises a circuit board (45a) on which the first laser light source (51a) and the second laser light source (51b) are mounted,
wherein the first holder (46a) has a first protrusion (48a) to be gripped when the first holder (46a) is rotated in order to adjust an interval between scanning positions of the laser lights emitted from the plurality of light emitting points of the first laser light source (51a) on the first photosensitive member (50Y) in a rotational direction of the first photosensitive member (50Y),
wherein the second holder (46b) has a second protrusion (48b) to be gripped when the second holder (46b) is rotated in order to adjust an interval between scanning positions of the second laser lights emitted from the plurality of light emitting points of the second laser light source (51b) on the second photosensitive member (50M) in a rotational direction of the second photosensitive member (50M),
wherein the first holder (46a) is mounted on the circuit board (45a) so that the first protrusion (48a) is positioned to be distant from the second holder (46b), and
wherein the second holder (46b) is mounted on the circuit board (45a) so that the second protrusion (48b) is positioned to be distant from the first holder (46a).

2. The light scanning apparatus (40) according to claim 1, wherein the light receiving portion (55) is mounted on the circuit board (45a).

3. The light scanning apparatus (40) according to claim 1, further comprising:
a third holder (46c) attached to the housing (101), and configured to hold a third laser light source (51c) having a plurality of light emitting points to emit third laser lights for exposing a third photosensitive member (50C) and a third collimator lens through which the third laser lights emitted from the third laser light source (51c) pass, wherein the third holder (46c) is configured to have a third lens barrel portion that connects a portion for holding the third laser light source (51c) and a portion for holding the third collimator lens;
a fourth holder (46d) attached to the housing (101), and configured to hold a fourth laser light source (51d) having a plurality of light emitting points to emit fourth laser lights for exposing a fourth photosensitive member (50Bk) and a fourth collimator lens through which the fourth laser lights emitted from the fourth laser light source (51d) pass, wherein the fourth holder (46d) is configured to have a fourth lens barrel portion that connects a portion for holding the fourth laser light source (51d) and a portion for holding the fourth collimator lens; and
an other lens (60c), of the plurality of optical elements (60a to 60f, 62a to 62f), to which respective laser lights of the third laser lights emitted from the third laser light source (51c) and deflected by the rotary polygon mirror (42) and the fourth laser lights emitted from the fourth laser light source (51d) and deflected by the rotary polygon mirror (42) are first incident,
wherein the third laser lights emitted from the third laser light source (51c) and the fourth laser lights emitted from the fourth laser light source (51d) are incident to a reflection surface of the rotary polygon mirror (42) at respective angles inclined over and under the virtual plane that is perpendicular to the rotation axis of the rotary polygon mirror (42) and incident to the plurality of reflection surfaces without being reflected by a mirror,
wherein when viewing the third holder (46c) and the fourth holder (46d) from above the virtual plane in the rotation axis direction, the third holder (46c) and the fourth holder (46d) are attached to the housing (101) so that a third incident light path of the third laser lights incident to the rotary polygon mirror (42) is in between a fourth incident light path of the fourth laser lights incident to the rotary polygon mirror (42) and the other lens (60c), and
wherein in the rotation axis direction, a part of the third lens barrel portion and a part of the fourth lens barrel portion overlap one another.

4. The light scanning apparatus (40) according to claim 1, wherein the first laser light source (51a) and the second laser light source (51b) are arranged in mutually different sides with respect to the virtual plane that is perpendicular to the rotation axis of the rotary polygon mirror (42) and incident to the plurality of reflection surfaces.

5. The light scanning apparatus (40) according to claim 4, wherein the first holder (46a) and the second holder (46b) are attached to the housing (101) so that an angle between the first incident light path and the virtual plane and an angle between the second incident light path and the virtual plane are larger than 0° and equal to or smaller than 3°.

6. The light scanning apparatus (40) according to claim 4, wherein the first holder (46a) is arranged in a bottom surface side of the housing (101) relative to the second holder (46b).

7. The light scanning apparatus (40) according to claim 3, wherein the first laser light source (51a) and the second laser light source (51b) are arranged in mutually different sides with respect to the virtual plane, and
wherein the third laser light source (51c) and the fourth laser light source (51d) are arranged in mutually different sides with respect to the virtual plane.

8. The light scanning apparatus (40) according to claim 7, wherein the first holder (46a), the second holder (46b), the third holder (46c), and the fourth holder (46d) are attached to the housing (101) so that an angle between the first incident light path and the virtual plane, an angle between the second incident light path and the virtual plane, an angle between the third incident light path and the virtual plane, and an angle between the fourth incident light path and the virtual plane are larger than 0° and equal to or smaller than 3°.

9. An image forming apparatus, comprising:
a first photosensitive member (50Y);
a second photosensitive member (50M);
a light scanning apparatus (40) according to claim 1, the first laser light source (51a) having the plurality of light emitting points to emit the first laser lights so as to form a latent image on the first photosensitive member (50Y), and the second laser light source (51b) having the plurality of light emitting points to emit the second laser lights so as to form a latent image on the second photosensitive member (50M);
the image forming apparatus further comprising:
a first developing device (13Y) configured to develop the latent image formed on the first photosensitive member (50Y) to form a toner image;
a second developing device (13M) configured to develop the latent image formed on the second photosensitive member (50M) to form a toner image;
a first transfer member (15Y) configured to transfer the toner image formed by the first developing device (13Y) to a transfer-receiving member (20); and
a second transfer member (15M) configured to transfer the toner image formed by the second developing device (13M) to the transfer-receiving member (20).

10. The image forming apparatus according to claim 9, wherein an angle between the first laser lights emitted from the first laser light source (51a) and directed from the light scanning apparatus (40) to the first photosensitive member (50Y) and an installation surface on which the light scanning apparatus (40) is installed is smaller than 90°, and
wherein an angle between the second laser lights emitted from the second laser light source (51b) and directed from the light scanning apparatus (40) to the second photosensitive member (50M) and the installation surface is smaller than 90°.

11. The light scanning apparatus (40) according to claim 1, wherein in an optical axis direction of the lens, the first lens barrel portion and the second lens barrel portion are disposed with a space therebetween and are offset from each other.

12. The light scanning apparatus (40) according to claim 3, wherein in an optical axis direction of the lens, the first lens barrel portion and the second lens barrel portion are disposed with a space therebetween and are offset from each other.

13. The image forming apparatus according to claim 9, wherein in an optical axis direction of the lens, the first lens barrel portion and the second lens barrel portion are disposed with a space therebetween and are offset from each other.

## Patentansprüche

1. Lichtabtastgerät (40), das Folgendes aufweist:
eine Vielzahl von optischen Elementen (60a bis 60f, 62a bis 62f) einschließlich eines Spiegels (60a bis 60f) und einer Linse (62a bis 62f);
ein Gehäuse (101), das gestaltet ist, um die Vielzahl von optischen Elementen (60a bis 60f, 62a bis 62f) darin aufzunehmen;
eine erste Halterung (46a), die an dem Gehäuse (101) angebracht ist und gestaltet ist, um eine erste Laserlichtquelle (51a) mit einer Vielzahl von lichtemittierenden Punkten zum Emittieren von erstem Laserlicht zum Belichten eines ersten lichtempfindlichen Bauteils (50Y) und eine erste Kollimatorlinse (53a) zu halten, durch die das erste Laserlicht, das von der ersten Laserlichtquelle (51a) emittiert wird, hindurchtritt, wobei die erste Haltung (46a) gestaltet ist, um einen ersten Linsenobjektivabschnitt zu haben, der einen Abschnitt zum Halten der ersten Laserlichtquelle (51a) und einen Abschnitt zum Halten der ersten Kollimatorlinse (53a) verbindet;
eine zweite Halterung (46b), die an dem Gehäuse (101) angebracht ist und gestaltet ist, um eine zweite Laserlichtquelle (51b) mit einer Vielzahl von lichtemittierenden Punkten zum Emittieren eines zweiten Laserlichts zum Belichten eines zweiten lichtempfindlichen Bauteils (50M) und eine zweite Kollimatorlinse (53b) zu halten, durch die das zweite Laserlicht, das von der zweiten Laserlichtquelle (51b) emittiert wird, hindurchtritt, wobei die zweite Halterung (46b) gestaltet ist, um einen zweiten Linsenobjektivabschnitt zu haben, der einen Abschnitt zum Halten der zweiten Laserlichtquelle (51b) und einen Abschnitt zum Halten der zweiten Kollimatorlinse (53b) verbindet;
einen Drehpolygonspiegel (42), der drehbar gestaltet ist und mit einer Vielzahl von Reflexionsflächen vorgesehen ist, durch die das erste Laserlicht, das von der ersten Laserlichtquelle (51a) emittiert wird, und das zweite Laserlicht, das von der zweiten Laserlichtquelle (51b) emittiert wird, abgelenkt werden; und
eine Linse (60a) der Vielzahl von optischen Elementen (60a bis 60f, 62a bis 62f), auf die ein jeweiliges Laserlicht des ersten Laserlichts, das von der ersten Laserlichtquelle (51a) emittiert wird und durch den Drehpolygonspiegel (42) abgelenkt wird, und des zweiten Laserlichts, das von der zweiten Laserlichtquelle (51b) emittiert wird und durch den Drehpolygonspiegel (42) abgelenkt wird, zuerst auftrifft,
wobei das erste Laserlicht, das von der ersten Laserlichtquelle (51a) emittiert wird, und das zweite Laserlicht, das von der zweiten Laserlichtquelle (51b) emittiert wird, auf eine Reflexionsfläche des Drehpolygonspiegels (42) in jeweiligen Winkeln auftreffen, die über und unter einer virtuellen Ebene geneigt sind, die senkrecht zu einer Drehachse des Drehpolygonspiegels (42) ist, und auf die Vielzahl von Reflexionsflächen auftreffen, ohne durch einen Spiegel reflektiert zu werden,
wobei, wenn die erste Halterung (46a) und die zweite Halterung (46b) von oberhalb der virtuellen Ebene in einer Drehachsenrichtung des Drehpolygonspiegels (42) angesehen wird, die erste Halterung (46a) und die zweite Halterung (46b) an dem Gehäuse (101) so angebracht sind, das ein erster auftreffender Lichtweg des ersten Laserlichts, das auf den Drehpolygonspiegel (42) auftrifft, zwischen einem zweiten auftreffenden Lichtweg des Laserlichts, das auf dem Drehpolygonspiegel (42) auftrifft, und der Linse (60a) liegt,
wobei in der Drehachsenrichtung ein Teil des ersten Linsenobjektivabschnitts und ein Teil des zweiten Linsenobjektivabschnitts einander überlappen,
wobei das Lichtabtastgerät (40) des Weiteren einen Lichtempfangsabschnitt (55) aufweist, der das Laserlicht, das von der ersten Laserlichtquelle (51a) emittiert wird und durch den Drehpolygonspiegel (42) abgelenkt wird, empfängt, um ein Synchronisierungssignal zu erzeugen,
wobei der Lichtempfangsabschnitt (55) in einer unterschiedlichen Position zu einer Position der ersten Halterung (46a) in der Drehachsenrichtung angeordnet ist,
wobei, wenn der Lichtempfangsabschnitt (55) von oberhalb der virtuellen Ebene in der Drehachsenrichtung angesehen wird, der Lichtempfangsabschnitt (55) in einer Position zum Empfangen des ersten Laserlichts, das von der ersten Laserlichtquelle (51a) emittiert wird und durch den Drehpolygonspiegel (42) abgelenkt wird, angeordnet ist, um zwischen dem zweiten auftreffenden Lichtweg und der Linse (60a) abzutasten, ohne durch einen Spiegel reflektiert zu werden,
wobei der Lichtempfangsabschnitt (55) Seite an Seite zu der ersten Halterung (46a) in der Drehachsenrichtung angeordnet ist,
wobei das Lichtabtastgerät (40) des Weiteren eine Schaltplatine (45a) aufweist, an der die erste Laserlichtquelle (51a) und die zweite Laserlichtquelle (51b) montiert sind,
wobei die erste Halterung (46a) einen ersten Vorsprung (48a) hat, der gegriffen werden soll, wenn die erste Halterung (46a) gedreht wird, um einen Abstand zwischen Abtastpositionen des Laserlichts, das von der Vielzahl von lichtemittierenden Punkten der ersten Laserlichtquelle (51a) auf das erste lichtempfindliche Bauteil (50Y) in einer Drehrichtung des ersten lichtempfindlichen Bauteils (50Y) emittiert wird, einzustellen,
wobei die zweite Halterung (46b) einen zweiten Vorsprung (48b) hat, der gegriffen werden soll, wenn die zweite Halterung (46b) gedreht wird, um einen Abstand zwischen Abtastpositionen des zweiten Laserlichts, das von der Vielzahl von lichtemittierenden Punkten der zweiten Laserlichtquelle (51b) auf das zweite lichtempfindliche Bauteil (50M) in einer Drehrichtung des zweiten lichtempfindlichen Bauteils (50M) emittiert wird, einzustellen,
wobei die erste Haltung (46a) an der Schaltplatine (45a) so montiert ist, dass der erste Vorsprung (48a) beabstandet zu der zweiten Halterung (46b) positioniert ist, und
wobei die zweiten Halterung (46b) an der Schaltplatine (45a) so montiert ist, dass der zweite Vorsprung (48b) beabstandet von der ersten Halterung (46a) positioniert ist.

2. Lichtabtastgerät (40) nach Anspruch 1, wobei der Lichtempfangsabschnitt (55) an der Schaltplatine (45a) montiert ist.

3. Lichtabtastgerät (40) nach Anspruch 1, das des Weiteren Folgendes aufweist:
eine dritte Halterung (46c), die an dem Gehäuse (101) angebracht ist und gestaltet ist, um eine dritte Laserlichtquelle (51c) mit einer Vielzahl von lichtemittierenden Punkten zum Emittieren von drittem Laserlicht zum Belichten eines dritten lichtempfindlichen Bauteils (50C) und eine dritte Kollimatorlinse zu halten, durch die das dritte Laserlicht, das von der dritten Laserlichtquelle (51c) emittiert wird, hindurchtritt, wobei die dritte Haltung (46c) gestaltet ist, um einen dritten Linsenobjektivabschnitt zu haben, der einen Abschnitt zum Halten der dritten Laserlichtquelle (51c) und einen Abschnitt zum Halten der dritten Kollimatorlinse verbindet;
eine vierte Halterung (46d), die an dem Gehäuse (101) angebracht ist und gestaltet ist, um eine vierte Laserlichtquelle (51d) mit einer Vielzahl von lichtemittierenden Punkten zum Emittieren eines vierten Laserlichts zum Belichten eines vierten lichtempfindlichen Bauteils (50Bk) und eine vierte Kollimatorlinse zu halten, durch die das vierte Laserlicht, das von der vierten Laserlichtquelle (51d) emittiert wird, hindurchtritt, wobei die vierte Halterung (46d) gestaltet ist, um einen vierten Linsenobjektivabschnitt zu haben, der einen Abschnitt zum Halten der vierten Laserlichtquelle (51d) und einen Abschnitt zum Halten der vierten Kollimatorlinse verbindet; und
eine weitere Linse (60c) der Vielzahl von optischen Elementen (60a bis 60f, 62a bis 62f), auf die ein jeweiliges Laserlicht des dritten Laserlichts, das von der dritten Laserlichtquelle (51c) emittiert wird und durch den Drehpolygonspiegel (42) abgelenkt wird, und des vierten Laserlichts, das von der vierten Laserlichtquelle (51d) emittiert wird und durch den Drehpolygonspiegel (42) abgelenkt wird, zuerst auftrifft,
wobei das dritte Laserlicht, das von der dritten Laserlichtquelle (51c) emittiert wird, und das vierte Laserlicht, das von der vierten Laserlichtquelle (51d) emittiert wird, auf eine Reflexionsfläche des Drehpolygonspiegels (42) in jeweiligen Winkeln auftreffen, die über und unter einer virtuellen Ebene geneigt sind, die senkrecht zu einer Drehachse des Drehpolygonspiegels (42) ist, und auf die Vielzahl von Reflexionsflächen auftreffen, ohne durch einen Spiegel reflektiert zu werden,
wobei, wenn die dritte Halterung (46c) und die vierte Halterung (46d) von oberhalb der virtuellen Ebene in der Drehachsenrichtung angesehen wird, die dritte Halterung (46c) und die vierte Halterung (46d) an dem Gehäuse (101) so angebracht sind, das ein dritter auftreffender Lichtweg des dritten Laserlichts, das auf den Drehpolygonspiegel (42) auftrifft, zwischen einem vierten auftreffenden Lichtweg des Laserlichts, das auf dem Drehpolygonspiegel (42) auftrifft, und der weiteren Linse (60c) liegt,
wobei in der Drehachsenrichtung ein Teil des dritten Linsenobjektivabschnitts und ein Teil des vierten Linsenobjektivabschnitts einander überlappen.

4. Lichtabtastgerät (40) nach Anspruch 1, wobei die erste Laserlichtquelle (51a) und die zweite Laserlichtquelle (51b) in gegenseitig unterschiedlichen Seiten in Bezug auf die virtuelle Ebene angeordnet sind, die senkrecht zu der Drehachse des Drehpolygonspiegels (42) ist und auf die Vielzahl von Reflexionsflächen auftrifft.

5. Lichtabtastgerät (40) nach Anspruch 4, wobei die erste Halterung (46a) und die zweite Halterung (46b) an dem Gehäuse (101) so angebracht sind, dass ein Winkel zwischen dem ersten auftreffenden Lichtweg und der virtuellen Ebene und ein Winkel zwischen dem zweiten auftreffenden Lichtweg und der virtuellen Ebene größer sind als 0° und gleich sind wie oder kleiner sind als 3°.

6. Lichtabtastgerät (40) nach Anspruch 4, wobei die erste Halterung (46a) in einer Bodenflächenseite des Gehäuses (101) relativ zu der zweiten Halterung (46b) angeordnet ist.

7. Lichtabtastgerät (40) nach Anspruch 3, wobei die erste Laserlichtquelle (51a) und die zweite Laserlichtquelle (51b) in gegenseitig unterschiedlichen Seiten in Bezug auf die virtuelle Ebene angeordnet sind, und
wobei die dritte Laserlichtquelle (51c) und die vierte Laserlichtquelle (51d) in gegenseitig unterschiedlichen Seiten in Bezug auf die virtuelle Ebene angeordnet sind.

8. Lichtabtastgerät (40) nach Anspruch 7, wobei die erste Halterung (46a), die zweite Halterung (46b), die dritte Halterung (46c) und die vierte Halterung (46d) an dem Gehäuse (101) so angebracht sind, dass ein Winkel zwischen dem ersten auftreffenden Lichtweg und der virtuellen Ebene, ein Winkel zwischen dem zweiten auftreffenden Lichtweg und der virtuellen Ebene, ein Winkel zwischen dem dritten auftreffenden Lichtweg und der virtuellen Ebene, und ein Winkel zwischen dem vierten auftreffenden Lichtweg und der virtuellen Ebene größer sind als 0° und gleich sind wie oder kleiner sind als 3°.

9. Bilderzeugungsgerät, das Folgendes aufweist:
ein erstes lichtempfindliches Bauteil (50Y);
ein zweites lichtempfindliches Bauteil (50M);
ein Lichtabtastgerät (40) nach Anspruch 1, wobei die erste Laserlichtquelle (51a) die Vielzahl von lichtemittierenden Punkten zum Emittieren des ersten Laserlichts hat, um ein latentes Bild auf dem ersten lichtempfindlichen Bauteil (50Y) zu erzeugen, und die zweite Laserlichtquelle (51b) die Vielzahl von lichtemittierenden Punkten zum Emittieren des zweiten Laserlichts hat, um ein latentes Bild auf dem zweiten lichtempfindlichen Bauteil (50M) zu erzeugen;
wobei das Bilderzeugungsgerät des Weiteren Folgendes aufweist:
eine erste Entwicklungsvorrichtung (13Y), die gestaltet ist, um das latente Bild, das auf dem ersten lichtempfindlichen Bauteil (50Y) erzeugt ist, zu entwickeln, um ein Tonerbild zu erzeugen;
eine zweite Entwicklungsvorrichtung (13M), die gestaltet ist, um das latente Bild, das auf dem zweiten lichtempfindlichen Bauteil (50M) erzeugt ist, zu entwickeln, um ein Tonerbild zu erzeugen;
ein erstes Übertragungsbauteil (15Y), das gestaltet ist, um das Tonerbild, das durch die erste Entwicklungsvorrichtung (13Y) erzeugt ist, auf ein Übertragungsempfangsbauteil (20) zu übertragen; und
ein zweites Übertragungsbauteil (15M), das gestaltet ist, um das Tonerbild, das durch die zweite Entwicklungsvorrichtung (13M) erzeugt ist, auf das Übertragungsempfangsbauteil (20) zu übertragen.

10. Bilderzeugungsgerät nach Anspruch 9, wobei ein Winkel zwischen dem ersten Laserlicht, das von der ersten Laserlichtquelle (51a) emittiert wird und von dem Lichtabtastgerät (40) zu dem ersten lichtempfindlichen Bauteil (50Y) gerichtet wird, und einer Installationsfläche, an der das Lichtabtastgerät (40) installiert ist, kleiner ist als 90°, und
wobei ein Winkel zwischen dem zweiten Laserlicht, das von der zweiten Laserlichtquelle (51b) emittiert wird und von dem Lichtabtastgerät (40) zu dem zweiten lichtempfindlichen Bauteil (50M) gerichtet wird, und der Installationsfläche kleiner ist als 90°.

11. Lichtabtastgerät (40) nach Anspruch 1, wobei in einer optischen Achsenrichtung der Linse der erste Linsenobjektivabschnitt und der zweite Linsenobjektivabschnitt mit einem Raum zwischen ihnen angeordnet sind und voneinander versetzt sind.

12. Lichtabtastgerät (40) nach Anspruch 3, wobei in einer optischen Achsenrichtung der Linse der erste Linsenobjektivabschnitt und der zweite Linsenobjektivabschnitt mit einem Raum zwischen ihnen angeordnet sind und voneinander versetzt sind.

13. Bilderzeugungsgerät nach Anspruch 9, wobei in einer optischen Achsenrichtung der Linse der erste Linsenobjektivabschnitt und der zweite Linsenobjektivabschnitt mit einem Raum zwischen ihnen angeordnet sind und voneinander versetzt sind.

## Revendications

1. Appareil de balayage de lumière (40), comprenant :
une pluralité d'éléments optiques (60a à 60f, 62a à 62f) comportant un miroir (60a à 60f) et une lentille (62a à 62f) ;
un logement (101) configuré pour loger la pluralité d'éléments optiques (60a à 60f, 62a à 62f) dans celui-ci ;
un premier support (46a) fixé au logement (101), et configuré pour supporter une première source de lumière laser (51a) ayant une pluralité de points d'émission de lumière pour émettre des premières lumières laser pour exposer un premier organe photosensible (50Y) et une première lentille collimatrice (53a) à travers laquelle passent les premières lumières laser émises par la première source de lumière laser (51a), dans lequel le premier support (46a) est configuré pour avoir une première portion de barillet de lentille qui relie une portion destinée à supporter la première source de lumière laser (51a) et une portion destinée à supporter la première lentille collimatrice (53a) ;
un deuxième support (46b) fixé au logement (101), et configuré pour supporter une deuxième source de lumière laser (51b) ayant une pluralité de points d'émission de lumière pour émettre des deuxièmes lumières laser pour exposer un deuxième organe photosensible (50M) et une deuxième lentille collimatrice (53b) à travers laquelle passent les deuxièmes lumières laser émises par la deuxième source de lumière laser (51b), dans lequel le deuxième support (46b) est configuré pour avoir une deuxième portion de barillet de lentille qui relie une portion destinée à supporter la deuxième source de lumière laser (51b) et une portion destinée à supporter la deuxième lentille collimatrice (53b) ;
un miroir polygonal rotatif (42) configuré pour être tourné et pourvu d'une pluralité de surfaces de réflexion à l'aide desquelles les premières lumières laser émises par la première source de lumière laser (51a) et les deuxièmes lumières laser émises par la deuxième source de lumière laser (51b) sont déviées ; et
une lentille (60a), de la pluralité d'éléments optiques (60a à 60f, 62a à 62f), sur laquelle sont tout d'abord incidentes des lumières laser respectives des premières lumières laser émises par la première source de lumière laser (51a) et déviées par le miroir polygonal rotatif (42) et des deuxièmes lumières laser émises par la deuxième source de lumière laser (51b) et déviées par le miroir polygonal rotatif (42),
dans lequel les premières lumières laser émises par la première source de lumière laser (51a) et les deuxièmes lumières laser émises par la deuxième source de lumière laser (51b) sont incidentes sur une surface de réflexion du miroir polygonal rotatif (42) à des angles respectifs inclinés au-dessus et en dessous d'un plan virtuel qui est perpendiculaire à un axe de rotation du miroir polygonal rotatif (42) et incidentes sur la pluralité de surfaces de réflexion sans être réfléchies par un miroir,
dans lequel, lors de la visualisation du premier support (46a) et du deuxième support (46b) depuis le dessus du plan virtuel dans une direction d'axe de rotation du miroir polygonal rotatif (42), le premier support (46a) et le deuxième support (46b) sont fixés au logement (101) de sorte qu'un premier trajet de lumière incidente des premières lumières laser incidentes sur le miroir polygonal rotatif (42) se trouve entre un deuxième trajet de lumière incidente des deuxièmes lumières laser incidentes sur le miroir polygonal rotatif (42) et la lentille (60a),
dans lequel, dans la direction d'axe de rotation, une partie de la première portion de barillet de lentille et une partie de la deuxième portion de barillet de lentille se chevauchent mutuellement,
dans lequel l'appareil de balayage de lumière (40) comprend en outre une portion de réception de lumière (55) qui reçoit les premières lumières laser émises par la première source de lumière laser (51a) et déviées par le miroir polygonal rotatif (42) pour générer un signal de synchronisation,
dans lequel la portion de réception de lumière (55) est agencée dans une position différente d'une position du premier support (46a) dans la direction d'axe de rotation,
dans lequel, lors de la visualisation de la portion de réception de lumière (55) depuis le dessus du plan virtuel dans la direction d'axe de rotation, la portion de réception de lumière (55) est agencée dans une position pour recevoir les premières lumières laser émises par la première source de lumière laser (51a) et déviées par le miroir polygonal rotatif (42) pour balayer entre le deuxième trajet de lumière incidente et la lentille (60a) sans être réfléchies par un miroir,
dans lequel la portion de réception de lumière (55) est agencée d'une manière côte à côte avec le premier support (46a) dans la direction d'axe de rotation,
dans lequel l'appareil de balayage de lumière (40) comprend en outre une carte de circuit imprimé (45a) sur laquelle sont montées la première source de lumière laser (51a) et la deuxième source de lumière laser (51b),
dans lequel le premier support (46a) a une première saillie (48a) à saisir lorsque le premier support (46a) est tourné afin d'ajuster un intervalle entre des positions de balayage des lumières laser émises par la pluralité de points d'émission de lumière de la première source de lumière laser (51a) sur le premier organe photosensible (50Y) dans une direction de rotation du premier organe photosensible (50Y),
dans lequel le deuxième support (46b) a une seconde saillie (48b) à saisir lorsque le deuxième support (46b) est tourné afin d'ajuster un intervalle entre des positions de balayage des deuxièmes lumières laser émises par la pluralité de points d'émission de lumière de la deuxième source de lumière laser (51b) sur le deuxième organe photosensible (50M) dans une direction de rotation du deuxième organe photosensible (50M),
dans lequel le premier support (46a) est monté sur la carte de circuit imprimé (45a) de sorte que la première saillie (48a) est positionnée pour être éloignée du deuxième support (46b), et
dans lequel le deuxième support (46b) est monté sur la carte de circuit imprimé (45a) de sorte que la seconde saillie (48b) est positionnée pour être éloignée du premier support (46a).

2. Appareil de balayage de lumière (40) selon la revendication 1, dans lequel la portion de réception de lumière (55) est montée sur la carte de circuit imprimé (45a).

3. Appareil de balayage de lumière (40) selon la revendication 1, comprenant en outre :
un troisième support (46c) fixé au logement (101), et configuré pour supporter une troisième source de lumière laser (51c) ayant une pluralité de points d'émission de lumière pour émettre des troisièmes lumières laser pour exposer un troisième organe photosensible (50C) et une troisième lentille collimatrice à travers laquelle passent les troisièmes lumières laser émises par la troisième source de lumière laser (51c), dans lequel le troisième support (46c) est configuré pour avoir une troisième portion de barillet de lentille qui relie une portion destinée à supporter la troisième source de lumière laser (51c) et une portion destinée à supporter la troisième lentille collimatrice ;
un quatrième support (46d) fixé au logement (101), et configuré pour supporter une quatrième source de lumière laser (51a) ayant une pluralité de points d'émission de lumière pour émettre des quatrièmes lumières laser pour exposer un quatrième organe photosensible (50Bk) et une quatrième lentille collimatrice à travers laquelle passent les quatrièmes lumières laser émises par la quatrième source de lumière laser (51d), dans lequel le quatrième support (46d) est configuré pour avoir une quatrième portion de barillet de lentille qui relie une portion destinée à supporter la quatrième source de lumière laser (51d) et une portion destinée à supporter la quatrième lentille collimatrice ; et
une autre lentille (60c), de la pluralité d'éléments optiques (60a à 60f, 62a à 62f), sur laquelle sont tout d'abord incidentes des lumières laser respectives des troisièmes lumières laser émises par la troisième source de lumière laser (51c) et déviées par le miroir polygonal rotatif (42) et des quatrièmes lumières laser émises par la quatrième source de lumière laser (51d) et déviées par le miroir polygonal rotatif (42),
dans lequel les troisièmes lumières laser émises par la troisième source de lumière laser (51c) et les quatrièmes lumières laser émises par la quatrième source de lumière laser (51d) sont incidentes sur une surface de réflexion du miroir polygonal rotatif (42) à des angles respectifs inclinés au-dessus et en dessous du plan virtuel qui est perpendiculaire à l'axe de rotation du miroir polygonal rotatif (42) et incidentes sur la pluralité de surfaces de réflexion sans être réfléchies par un miroir,
dans lequel, lors de la visualisation du troisième support (46c) et du quatrième support (46d) depuis le dessus du plan virtuel dans la direction d'axe de rotation, le troisième support (46c) et le quatrième support (46d) sont fixés au logement (101) de sorte qu'un troisième trajet de lumière incidente des troisièmes lumières laser incidentes sur le miroir polygonal rotatif (42) se trouve entre un quatrième trajet de lumière incidente des quatrièmes lumières laser incidentes sur le miroir polygonal rotatif (42) et l'autre lentille (60c), et
dans lequel, dans la direction d'axe de rotation, une partie de la troisième portion de barillet de lentille et une partie de la quatrième portion de barillet de lentille se chevauchent mutuellement.

4. Appareil de balayage de lumière (40) selon la revendication 1, dans lequel la première source de lumière laser (51a) et la deuxième source de lumière laser (51b) sont agencées dans des côtés mutuellement différents par rapport au plan virtuel qui est perpendiculaire à l'axe de rotation du miroir polygonal rotatif (42) et incidentes sur la pluralité de surfaces de réflexion.

5. Appareil de balayage de lumière (40) selon la revendication 4, dans lequel le premier support (46a) et le deuxième support (46b) sont fixés au logement (101) de sorte qu'un angle entre le premier trajet de lumière incidente et le plan virtuel et un angle entre le deuxième trajet de lumière incidente et le plan virtuel sont supérieurs à 0° et égaux ou inférieurs à 3°.

6. Appareil de balayage de lumière (40) selon la revendication 4, dans lequel le premier support (46a) est agencé dans un côté de surface inférieure du logement (101) par rapport au deuxième support (46b).

7. Appareil de balayage de lumière (40) selon la revendication 3, dans lequel la première source de lumière laser (51a) et la deuxième source de lumière laser (51b) sont agencées dans des côtés mutuellement différents par rapport au plan virtuel, et
dans lequel la troisième source de lumière laser (51c) et la quatrième source de lumière laser (51d) sont agencées dans des côtés mutuellement différents par rapport au plan virtuel.

8. Appareil de balayage de lumière (40) selon la revendication 7, dans lequel le premier support (46a), le deuxième support (46b), le troisième support (46c) et le quatrième support (46d) sont fixés au logement (101) de sorte qu'un angle entre le premier trajet de lumière incidente et le plan virtuel, un angle entre le deuxième trajet de lumière incidente et le plan virtuel, un angle entre le troisième trajet de lumière incidente et le plan virtuel, et un angle entre le quatrième trajet de lumière incidente et le plan virtuel sont supérieurs à 0° et égaux ou inférieurs à 3°.

9. Appareil de formation d'image, comprenant :
un premier organe photosensible (50Y) ;
un deuxième organe photosensible (50M) ;
un appareil de balayage de lumière (40) selon la revendication 1, la première source de lumière laser (51a) ayant la pluralité de points d'émission de lumière pour émettre les premières lumières laser de manière à former une image latente sur le premier organe photosensible (50Y), et la deuxième source de lumière laser (51b) ayant la pluralité de points d'émission de lumière pour émettre les deuxièmes lumières laser de manière à former une image latente sur le deuxième organe photosensible (50M) ;
l'appareil de formation d'image comprenant en outre :
un premier dispositif de développement (13Y) configuré pour développer l'image latente formée sur le premier organe photosensible (50Y) pour former une image de toner ;
un second dispositif de développement (13M) configuré pour développer l'image latente formée sur le deuxième organe photosensible (50M) pour former une image de toner ;
un premier organe de transfert (15Y) configuré pour transférer l'image de toner formée par le premier dispositif de développement (13Y) sur un organe de transfert-réception (20) ; et
un second organe de transfert (15M) configuré pour transférer l'image de toner formée par le second dispositif de développement (13M) sur l'organe de transfert-réception (20).

10. Appareil de formation d'image selon la revendication 9, dans lequel un angle entre les premières lumières laser émises par la première source de lumière laser (51a) et dirigées de l'appareil de balayage de lumière (40) au premier organe photosensible (50Y) et une surface d'installation sur laquelle l'appareil de balayage de lumière (40) est installé est inférieur à 90°, et
dans lequel un angle entre les deuxièmes lumières laser émises par la deuxième source de lumière laser (51b) et dirigées de l'appareil de balayage de lumière (40) au deuxième organe photosensible (50M) et la surface d'installation est inférieur à 90°.

11. Appareil de balayage de lumière (40) selon la revendication 1, dans lequel, dans une direction d'axe optique de la lentille, la première portion de barillet de lentille et la deuxième portion de barillet de lentille sont disposées avec un espace entre elles et sont décalées l'une par rapport à l'autre.

12. Appareil de balayage de lumière (40) selon la revendication 3, dans lequel, dans une direction d'axe optique de la lentille, la première portion de barillet de lentille et la deuxième portion de barillet de lentille sont disposées avec un espace entre elles et sont décalées l'une par rapport à l'autre.

13. Appareil de formation d'image selon la revendication 9, dans lequel, dans une direction d'axe optique de la lentille, la première portion de barillet de lentille et la deuxième portion de barillet de lentille sont disposées avec un espace entre elles et sont décalées l'une par rapport à l'autre.
